# EUROPÄISCHE PATENTSCHRIFT

(11) **EP 0 320 723 B1**
(45) Veröffentlichungstag und Bekanntmachung des Hinweises auf die Patenterteilung: **31.03.1993**
(21) Anmeldenummer: 88120192.5
(22) Anmeldetag: 03.12.1988
(51) Int. Cl.: B25F 5/00, F16H 35/10

(54) **Maschine mit variabler Drehmomenteinstellung**
Machine with variable torque adjustment
Machine avec réglage du couple variable

(30) Priorität: 18.12.1987 DE 3742952
(43) Veröffentlichungstag der Anmeldung: 21.06.1989
(73) Patentinhaber: C. & E. FEIN GmbH & Co., D-70176 Stuttgart (DE)
(72) Erfinder: Fink, Manfred, D-7101 Eberstadt (DE); Schreiber, Wolfgang, D-7000 Stuttgart 75 (DE); Ludwig, Manfred, D-7000 Stuttgart 1 (DE); Hald, Ewald, D-7024 Filderstadt 1 (DE); Kloss, Günther, D-7000 Stuttgart 50 (DE)
(74) Vertreter: Witte, Alexander, Dr.-Ing.

(56) Entgegenhaltungen:
- EP-A- 0 182 986
- EP-A- 0 239 670
- DE-A- 2 033 227
- DE-A- 2 318 760
- FR-A- 2 316 049
- FR-A- 2 396 626
- US-A- 2 452 178
- PATENT ABSTRACTS OF JAPAN vol. 4, no. 84 (M-16)(566) 17 Juni 1980, & JP-A-55 44142 (MITSUBISHI DENKI K.K.) 28 März 1980,

## Beschreibung

Die Erfindung betrifft eine motorgetriebene Maschine mit variabler Drehmomenteinstellung, insbesondere ein elektrisches Handwerkzeug mit einem Motor und einem eine Arbeitsspindel antreibenden Planetengetriebe, umfassend ein drehbar gelagertes und bei Übersteigen eines einstellbaren Grenzdrehmoments gegen die Wirkung einer Federkraft einen Motorabschalter betätigendes Hohlrad.

Derartige motorgetriebene Maschinen sind bereits aus der DE-A- 28 29 291 bekannt. Bei der in dieser Druckschrift offenbarten Vorrichtung ist das Hohlrad stirnseitig mit einem Nockenelement versehen, welches gegen eine Kugel anliegt, die in Richtung der Stirnseite dieses Hohlrads federbeaufschlagt ist. Sobald das auf das Hohlrad wirkende Gegendrehmoment einen bestimmten Grenzwert übersteigt, wird durch das Nockenelement die Kugel in axialer Richtung verschoben und über diese Axialbewegung der Motorabschalter betätigt, so daß der Motor stromlos ist und somit der Antrieb der Arbeitsspindel unterbrochen ist.

Die vorstehend beschriebene Konstruktion hat den Nachteil, daß durch die verwendete Schraubenfeder eine exakte Einstellung des Grenzdrehmoments nicht möglich ist. Außerdem hat die Schraubenfeder den Nachteil, daß sie keine raumsparende und kompakte Bauweise des Geräts erlaubt.

Der Erfindung liegt daher die Aufgabe zugrunde, eine Maschine mit variabler Drehmomenteinstellung der gattungsgemäßen Art derart zu verbessern, daß diese eine möglichst genaue Drehmomenteinstellung bei möglichst kompakter Bauweise erlaubt.

Diese Aufgabe wird bei einer motorgetriebenen Maschine mit variabler Drehmomenteinstellung der eingangs beschriebenen Art erfindungsgemäß dadurch gelöst, daß zur Erzeugung der Federkraft ein sich in axialer Richtung längsseits des Planetengetriebes erstreckendes Torsionsfederelement vorgesehen ist, welches an einem Ende ein in einen Nocken am Hohlrad eingreifendes Schwenkelement trägt und an einem entgegengesetzten Ende in einem Widerlager gehalten ist, daß das Schwenkelement entgegen einer Kraftwirkung des Torsionsfederelements aus einer Ausgangsstellung herausschwenkbar ist und daß dabei der Motorabschalter betätigbar ist.

Der große Vorteil der erfindungsgemäßen Lösung ist vor allem darin zu sehen, daß anstelle einer Schraubenfeder ein Torsionsfederelement verwendet ist und daß dieses Torsionsfederelement sich längs an einer Außenseite des Planetengetriebes entlang erstreckt und dadurch in einer für eine möglichst genaue Einstellung der Drehmomentabschaltung ausreichenden Länge ausgeführt werden kann, ohne erheblichen zusätzlichen Raum zu benötigen.

Es ist zwar aus der DE-A- 36 10 820 ebenfalls die Verwendung eines Torsionselements im Zusammenhang mit einem Getriebe mit gewöhnlicher Vorgelegewelle bekannt, bei dieser Vorrichtung ist jedoch das Torsionselement vor dem Getriebe parallel zur Arbeitsspindel angeordnet und benötigt somit erheblichen zusätzlichen Raum, so daß eine kompakte Bauweise nicht möglich ist.

Bei Verwendung eines Torsionsfederelements ist es grundsätzlich möglich, dieses in der Ausgangsstellung nicht vorzuspannen, so daß ein steigendes Gegendrehmoment auch eine zunehmende Verdrehung des Schwenkelements zur Folge hat. Um jedoch eine möglichst definierte Motorabschaltung zu erreichen, hat es sich als zweckmäßig erwiesen, wenn das Torsionsfederelement in einer das Schwenkelement in seine Ausgangsstellung bewegenden Richtung vorgespannt ist.

Da insbesondere auch das Schwenkelement aufgrund des zwangs läufig notwendigen Hebels zwischen dem Torsionselement und einem Angriff des Nockens viel Bauraum benötigt, ist es zweckmäßig, wenn das Schwenkelement auf einer Seite des Planetengetriebes angeordnet ist. Dies kann sowohl antriebsseitig als auch abtriebsseitig sein. Ein bevorzugtes Ausführungsbeispiel sieht vor, daß das Schwenkelement antriebsseitig des Planetengetriebes angeordnet ist.

Um zusätzlich Raum zu sparen, hat es sich als zweckmäßig erwiesen, wenn das Schwenkelement eine Stirnseite des Planetengetriebes übergreift, so daß das Schwenkelement keinen zusätzlichen über den Umfang des Planetengetriebes hinausgehenden Raum benötigt.

Insbesondere bei einer antriebsseitigen Anordnung des Schwenkelements ist es günstig, wenn dieses in einen Zwischenraum zwischen Motor und Planetengetriebe eingreift und dadurch diesen ohnehin vorhandenen Zwischenraum optimal ausnutzt.

Weitere Raumeinsparungen sind dadurch möglich, daß der Motorabschalter ebenfalls im Bereich des Zwischenraums, vorzugsweise in dem Zwischenraum selbst, angeordnet ist.

Ergänzend zur Anordnung des Schwenkelements ist es ebenfalls zweckmäßig, wenn auch der Nocken auf einer Stirnseite des Planetengetriebes angeordnet ist, wobei hierzu vorzugsweise die dem Motor zugewandte Stirnseite gewählt wird.

Bei der eingangs beschriebenen bekannten Drehmomentabschaltung ist der Motorabschalter so angeordnet, daß er durch das axial verschiebbare Element beaufschlagt wird. Dies hat den Nachteil, daß insbesondere bei einem plötzlichen Anstieg des Drehmoments das axial verschiebbare Teil sehr stark beschleunigt und damit der Motorabschalter sehr schnell betätigt wird, wobei dieses einen grösseren Bremsweg benötigt als bei einem langsamen Anstieg des Gegendrehmoments, was zur Folge haben kann, daß der Motorabschalter durch das auf diesen auftreffende beschleunigte Teil beschädigt wird. Aus diesem Grund hat es sich als vorteilhaft erwiesen, wenn das Schwenkelement in der Ausgangsstellung den Motorabschalter beaufschlagt und wenn der Motorabschalter in seiner nicht beaufschlagten Stellung den Motor abschaltet. In diesem Fall kann der Motorabschalter durch das beschleunigte Schwenkelement nicht beschädigt werden, da dieses sich bei der Beschleunigung von diesem weg bewegt und die Ausschaltung dadurch erfolgt, daß der Motorabschalter nicht betätigt ist.

Um den Motorabschalter genau justieren und damit den Ausschaltpunkt genau vorwählen und voreinstellen zu können, hat es sich als günstig erwiesen, wenn der Motorabschalter in Richtung auf die Ausgangsstellung des Schwenkelements zustellbar ist.

Bei einer Ausführungsform des Schwenkelements weist dieses eine den Nocken aufnehmende Schaltgabel auf.

Bei einer bevorzugten Ausführungsform der erfindungsgemässen Maschine ist dabei vorgesehen, daß das Hohlrad um einen begrenzten Schwenkwinkel drehbar ist. Diese Ausführungsform hat den großen Vorteil, daß sie beispielsweise beim Schrauben ein Anziehen der Schraube im sogenannten harten Schraubfall, das heißt bei plötzlichem Anstieg des Gegendrehmoments, mit einem Drehmoment ermöglicht, welches das von der erfindungsgemäßen Maschine im Normallauf aufbringbare Drehmoment übersteigt. Dies ist dadurch zu erklären, daß durch den begrenzten Schwenkwinkel eine Verdrehung des Hohlrades gestoppt wird und der in der gesamten Antriebseinrichtung vorhandene Drehimpuls zum letztendlichen Festziehen der Schraube verwendet werden kann. Dagegen arbeitet diese Vorrichtung im weichen Schraubfall, das heißt bei langsam ansteigenden Gegendrehmoment so, daß sie bei Erreichen des maximalen Drehmoments abschaltet.

Eine zur vorstehend beschriebenen Version alternative Ausführung der erfindungsgemäßen Lösung sieht vor, daß das Hohlrad um eine volle Umdrehung drehbar ist und daß das Schwenkelement einen Anschlagarm aufweist, welcher sich in eine Umlaufbahn des Nockens erstreckt. Bei diesem Ausführungsbeispiel ist es somit möglich, daß der Nocken sich über den Anschlagarm hinwegbewegt und sich daher der restliche in dem gesamten Antrieb enthaltene Drehimpuls während des Umlaufes des Hohlrades "totläuft".

Vorzugsweise ist bei einer derartigen Ausführungsform der Anschlag so ausgebildet, daß er eine bezüglich einer durch die Drehachse des Hohlrads hindurchlaufenden Ebenenschar in einem spitzen Winkel geneigte Auflauffläche aufweist. Eine derart geformte Auflauffläche hat den Vorteil, daß sie den Anschlagarm erst bei einem sehr großen Drehmoment, jedoch dann sehr schnell aus der Umlaufbahn des Nockens herausbewegt und dadurch ein sehr schnelles Ansprechen des Motorabschalters ermöglicht.

Bei den bislang beschriebenen Ausführungsbeispielen der erfindungsgemäßen Maschine mit variabler Drehmomentabschaltung wurde nichts darüber ausgesagt, wie das Widerlager des Torsionselements anzuordnen ist. In Anlehnung an die Anordnung des Schwenkelements hat es sich als raumsparend erwiesen, wenn das Widerlager auf einer dem Schwenkelement gegenüberliegenden Seite des Planetengetriebes angeordnet ist, wobei dies dann, wenn das Schwenkelement antriebsseitig angeordnet sein sollte, zur Folge hat, daß das Widerlager vorzugsweise abtriebsseitig angeordnet ist.

Um dem Torsionselement zur variablen Drehmomenteinstellung eine variable Vorspannung geben zu können, ist es von Vorteil, wenn eine abtriebsseitig des Planetengetriebes angeordnete Verstelleinrichtung für das Widerlager vorgesehen ist, mit welcher über das Widerlager die Vorspannung des Torsionselements regelbar ist.

In Fortbildung dieser Lösung ist daher vorgesehen, daß die Verstelleinrichtung einen das Torsionselement als Widerlager drehfest aufnehmenden und koaxial zum Torsionsstab drehbar gelagerten Hebel umfaßt, welcher mit seinem freien Ende auf einer Kulisse eines Einstellgliedes anliegt, so daß durch Bewegen der Kulisse des Einstellgliedes relativ zum freien Ende des Hebels dieser in unterschiedliche Stellungen drehbar und damit das Torsionselement unterschiedlich vorspannbar ist.

Bezüglich der Anordnung des Einstellgliedes selbst ist vorteilhafterweise vorgesehen, daß dieses koaxial zur Arbeitsspindel drehbar angeordnet ist, um eine möglichst einfache Verstellung zu ermöglichen.

Günstigerweise ist das Einstellglied dabei als Hülse ausgebildet und auf einem zylindrischen Ansatz eines Getriebegehäuses gelagert.

Um unterschiedliche Einstellungen des Einstellgliedes fixieren zu können, hat es sich als günstig erwiesen, wenn der zylindrische Ansatz in seiner Mantelfläche mit in Achsrichtung desselben verlaufenden Nuten versehen ist, in welche Rastnasen des Einstellgliedes eingreifen, so daß das Einstellglied in unterschiedlichen Dreheinstellungen fixierbar ist.

Diese Fixierung ist insbesondere dann spielfrei möglich, wenn an dem Einstellglied zwei Rastnasen vorgesehen sind, und wenn eine dieser Rastnasen gegenüber der ihr entsprechenden Nut einen geringen Versatz aufweist, so daß die derart angeordneten Rastnasen eine geringfügig verspannte Fixierung des Einstellgliedes in den Nuten erlauben.

Aus Gründen der Bedienungssicherheit ist es bei allen vorstehenden Ausführungsbeispielen von großem Vorteil, wenn das Torsionsfederelement in einer das Schwenkelement in seine Ausgangsstellung bewegenden Richtung vorgespannt ist.

Weitere Merkmale und Vorteile sind Gegenstand der nachfolgenden Beschreibung sowie der zeichnerischen Darstellung einiger Ausführungsbeispiele. In der Zeichnung zeigen:
- Fig. 1: einen Längsschnitt durch ein erstes Ausführungsbeispiel eines erfindungsgemäßen Drehmomentschraubers;
- Fig. 2: einen Schnitt längs Linie 2-2 in Fig. 1;
- Fig. 3: einen Schnitt längs Linie 3-3 in Fig. 1;

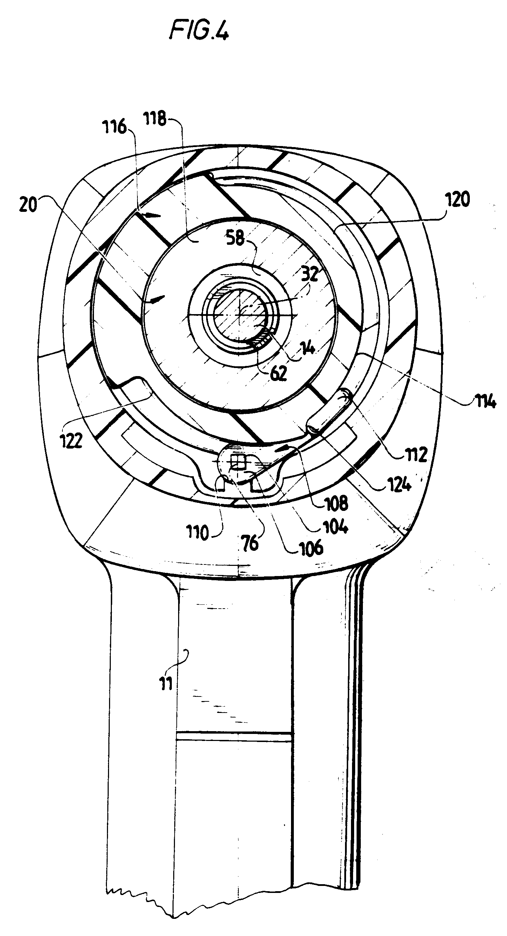

- Fig. 4: einen Schnitt längs Linie 4-4 in Fig. 1;
- Fig. 5: einen Teillängsschnitt ähnlich Fig. 1 eines zweiten Ausführungsbeispiels und
- Fig. 6: einen Schnitt längs Linie 6-6 in Fig. 5.

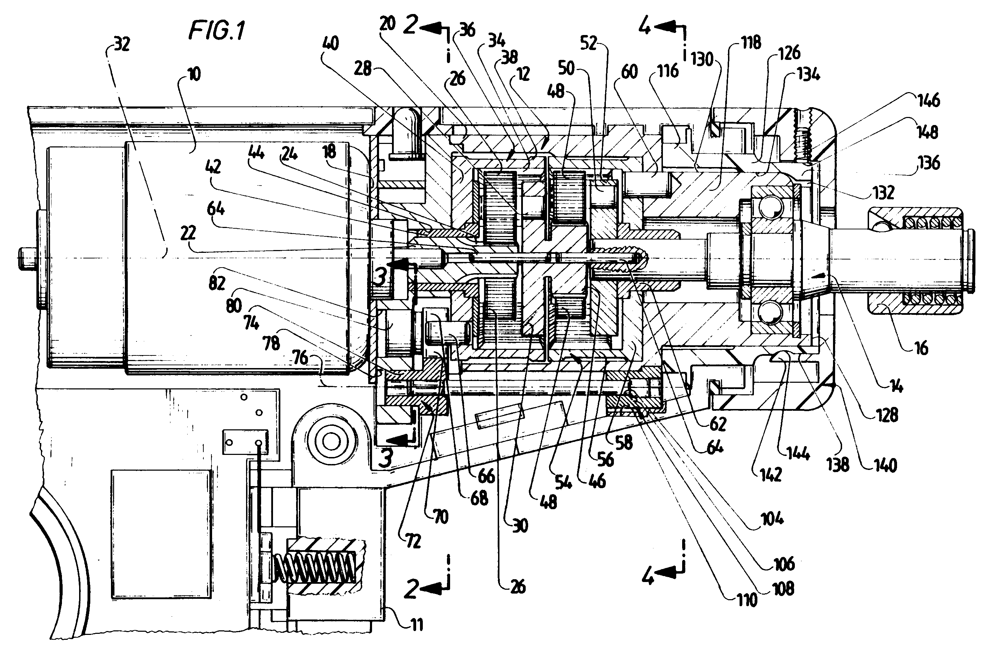

Ein Ausführungsbeispiel der erfindungsgemäßen Maschine mit variabler Drehmomenteinstellung, in diesem Fall ein Drehmomentschrauber, dargestellt in Fig. 1, umfaßt einen durch einen Druckschalter 11 einschaltbaren Motor 10, welcher ein als Ganzes mit 12 bezeichnetes Planetenradgetriebe und über dieses ein als Arbeitsspindel dienende Antriebswelle 14 antreibt, an welcher dann beispielsweise ein Schrauberkopf 16 gehalten ist.

Der Motor 10 ist mit seiner Stirnseite 18 an einem als Ganzes mit 20 bezeichneten Getriebegehäuse gehalten, welches das Planetenradgetriebe 12 aufnimmt. Von dieser Stirnseite des Motors 10 weg erstreckt sich eine Motorwelle 22 in das Planetenradgetriebe 12 hinein, an deren dem Motor 10 abgewandtem Ende ein Motorritzel 24 angeformt ist. Dieses Motorritzel 24 dient als Sonnenrad einer ersten Getriebestufe und treibt um dieses herum angeordnete Planetenräder 26, welche drehbar auf sich koaxial zur Motorwelle 22 erstreckenden Lagerstiften 28 eines als Ganzes mit 30 bezeichneten Planetenträgers gelagert sind, wobei der Planetenträger 30 koaxial zu einer Drehachse 32 der Motorwelle 22 angeordnet ist.

Die Planetenräder 26 greifen mit ihrer Verzahnung einerseits in das Motorritzel 24 ein und stützen sich andererseits in einer Innenverzahnung 34 eines als Ganzes mit 36 bezeichneten ersten Hohlrades ab, welches einen die Innenverzahnung 34 tragenden Hohlradzylinder 38 sowie einen an diesen angeformten Hohlradteller 40 aufweist. Dieser Hohlradteller 40 ist auf der dem Motor 10 zugewandten Seite der Planetenräder 26 angeordnet, erstreckt sich in einer senkrecht zur Drehachse 32 stehenden Ebene und wird durch eine koaxial zu diesem und zur Drehachse 32 angeordnete Büchse 42 gehalten. Diese Büchse erstreckt sich von dem Hohlradteller 40 in Richtung des Motors 10 und greift in eine die Motorwelle 22 umgebende Lagerbohrung 44 des Getriebegehäuses 20 in einem zwischen dem Motorritzel 24 und dem Motor 10 liegenden Bereich ein, so daß die Büchse 42 die Motorwelle 22 umschließt und in der diese umgebenden Lagerbohrung 44 des Getriebegehäuses 20 drehbar gelagert ist.

Damit ist insgesamt auch das diese Büchse 42 umfassende erste Hohlrad 36 in dem Getriebegehäuse 20 drehbar gelagert.

Das Motorritzel 24, die Planetenräder 26, der Planetenträger 30 und das erste Hohlrad 36 stellen die erste Getriebestufe des Planetenradgetriebes 12 dar. Es wäre somit grundsätzlich möglich, einen erfindungsgemäßen Drehmomentschrauber mit einer einzigen Getriebestufe auszubilden. Lediglich, um in einfacher Weise das Planetenradgetriebe 12 mit unterschiedlichen Übersetzungsverhältnissen aufbauen zu können, ist eine zweite Getriebestufe vorgesehen.

Zum Antrieb der zweiten Getriebestufe ist an den Planetenträger 30 auf der dem Motor 10 gegenüberliegenden Seite ein Antriebsritzel 46 angeformt, welches ebenfalls koaxial zur Drehachse 32 angetrieben ist. Um dieses Antriebsritzel 46 herum sind wiederum Planetenräder 48 vorgesehen, welche ebenfalls drehbar an Lagerstiften 50 eines zweiten Planetenträgers 52 gehalten sind, der seinerseits koaxial zur Drehachse 32 angeordnet und drehfest mit der Antriebswelle 14 verbunden ist. Die Planetenräder 48 greifen mit ihrer Verzahnung einerseits in das Antriebsritzel 46 ein und andererseits in eine Innenverzahnung eines zweiten Hohlrades 54, welches ebenfalls einen Hohlradzylinder 56 sowie einen an diesen angeformten Hohlradteller 58 aufweist. Dieser Hohlradteller ist allerdings auf der dem Motor 10 abgewandten Seite der zweiten Getriebestufe angeordnet, in dem Getriebegehäuse 20 mittels eines Verankerungsstiftes 60 drehfest gehalten und stützt sich zusätzlich mittels einer Lagerbüchse 62 auf der Antriebswelle 14 ab.

Um sowohl die Motorwelle 22 als auch den Planetenträger 30 mit dem Antriebsritzel 46 sowie die Antriebswelle 14 fluchtend und koaxial zum Motor 10 zu fixieren, sind sowohl das Motorritzel 24, der Planetenträger 30 mit seinem Antriebsritzel 46 als auch die Antriebswelle 14 auf ihrer dem Antriebsritzel 46 zugewandten Seite mit koaxialen Bohrungen versehen, in welchen Zentrierstifte 64 drehbar eingesetzt sind.

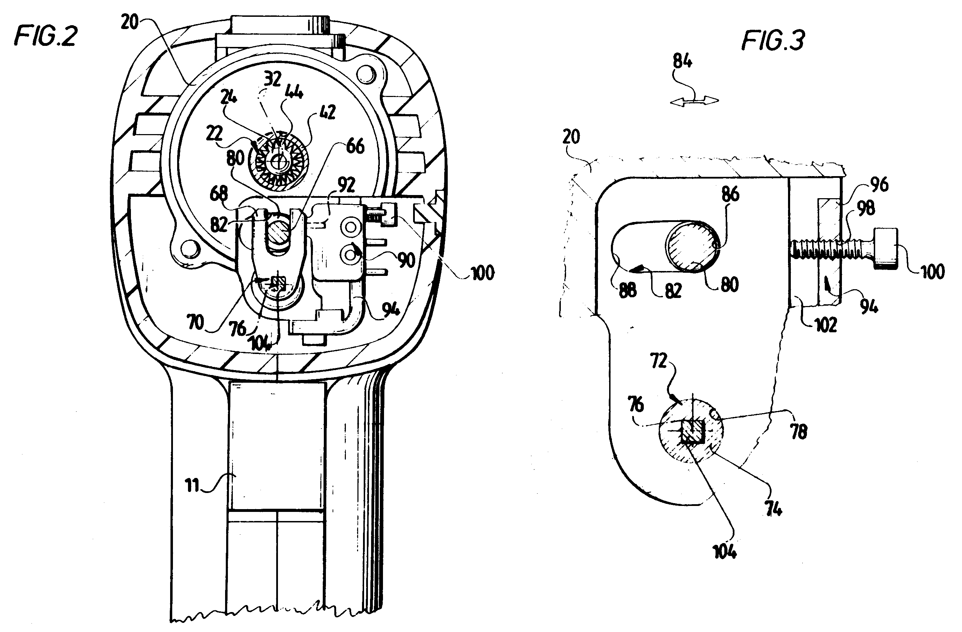

Wie bereits ausgeführt, ist das erste Hohlrad 36 im Getriebegehäuse 20 um die Drehachse 32 drehbar. Eine derartige Drehung erfolgt gegensinnig zur Drehrichtung des Planetenträgers 30. Diese Drehbarkeit des ersten Hohlrades 36 wird dazu ausgenützt, um das an der Antriebswelle 14 auftretende Gegendrehmoment beim Schraubvorgang zu erfassen. Hierzu ist am Hohlradteller 40 des ersten Hohlrades 36 im Abstand von der Drehachse 32 ein zu dieser parallel ausgerichteter Schaltstift 66 vorgesehen, welcher in einer Passbohrung im Hohlradteller 40 sitzt und sich von diesem weg in Richtung des Motors 10 erstreckt. Wie in Fig. 2 dargestellt, greift dieser Schaltstift 66 zwischen zwei Schenkel 68 einer Schaltgabel 70 ein. Diese Schaltgabel ist Teil eines als Ganzes mit 72 bezeichneten Schwenkhebels, welcher mit einem zylindrischen Lagerkörper 74, dessen Zylinderachse 76 parallel zur Drehachse 32 ausgerichtet ist, in einer Lagerbohrung 78 um seine Zylinderachse 76 drehbar gehalten ist. Dabei ist die Zylinderachse 76 so angeordnet, daß sie radial außen liegend zum Planetenradgetriebe 12 und parallel zu der Drehachse 32 verläuft. Der Schwenkhebel 72 erstreckt sich dann in einen Zwischenraum zwischen der Stirnseite 18 des Motors 10 und dem Hohlradteller 40 des Planetenradgetriebes 12 in Richtung auf die Drehachse 32.

Auf der der Stirnseite 18 des Motors 10 zugewandten Seite der Schaltgabel 70 ist, wie Fig. 3 zeigt, ein ungefähr parallel zur Drehachse 32 ausgerichteter Fortsatz 80 angeformt, welcher in eine ovale Ausnehmung 82 im Getriebegehäuse 20 eingreift, die mit ihrer Längsachse so ausgerichtet ist, daß sie eine Schwenkbewegung des Schwenkhebels 72 um die Drehachse 76 um einen bestimmten Schwenkwinkel erlaubt, welcher vorzugsweise in der Größenordnung von ungefähr 10° liegt. Senkrecht zur Schwenkrichtung 84 verlaufende Wandflächen 86 und 88 der ovalen Ausnehmung 82 definieren dabei Extremstellungen des Schwenkhebels 72, wobei bei dem in Fig. 2 und 3 dargestellten Ausführungsbeispiel die Wandfläche 86 eine Ausgangsstellung des Schwenkhebels 72 dadurch definiert, daß der Fortsatz 80 an dieser anliegt, während die Wandfläche 88 dann die maximale Schwenkstellung bestimmt.

In dem Zwischenraum zwischen der Stirnseite 18 des Motors 10 und dem Hohlradteller 40 des ersten Hohlrads 36 ist ein Motorabschalter 90 angeordnet, welcher mit einem Taster 92 die unterschiedlichen Stellungen der Schaltgabel 70 erfaßt. Dieser Motorabschalter 90 ist seinerseits an einem winkelförmigen Trägerbügel 94 so gehalten, daß dessen Taster 92 - wie in Fig. 2 dargestellt - mit dem rechten Schenkel 68 der Schaltgabel 70 zusammenwirkt und dann, wenn der Schwenkhebel 72 und somit die Schaltgabel 70 in ihrer Ausgangsstellung stehen, betätigt ist. In dieser betätigten Stellung des Tasters 92 erlaubt der Motorabschalter, daß der Motor 10 eingeschaltet werden kann. Schwenkt dagegen der Schwenkhebel 72 und somit die Schaltgabel 70 von der Ausgangsstellung, in welcher der Fortsatz 80 an der Wandfläche 86 der ovalen Ausnehmung 82 anliegt, in Richtung der maximalen Schwenkstellung, in welcher der Fortsatz 80 an der Wandfläche 88 der ovalen Ausnehmung 82 anliegt, so betätigt der rechte Schenkel 68 der Schaltgabel 70 den Taster 92 nicht mehr und der Motorabschalter 90 schaltet den Motor 10 ab.

Um den insbesondere als Mikroschalter mit möglichst kurzem Schaltweg des Tasters 92 ausgebildeten Motorabschalter 90 in seiner Lage relativ zu dem rechten Schenkel 68 der Schaltgabel 70 positionieren zu können, ist der Trägerbügel 94 im Bereich seines freien Endes 96 mit einer Gewindebohrung 98 versehen, in welche eine Schraube 100 eingeschraubt ist, die sich in einer zur Drehachse 32 senkrechten, ungefähr parallel zur Schwenkrichtung 84 des Schwenkhebels 72 verlaufenden Richtung auf eine Stützfläche 102 am Getriebegehäuse 20 erstreckt und auf dieser aufliegt. Durch verstärktes Eindrehen der Schraube 100 kann somit der Trägerbügel 94 mit seinem Ende 96 von der Stützfläche 102 weggebogen werden oder umgekehrt, so daß die Federwirkung des Trägerbügels 94 in Verbindung mit der Schraube 100 zu einer Feinjustierung des Motorabschalters 90 relativ zum rechten Schenkel 68 der Schaltgabel 70 dient.

Damit ein Verdrehen des ersten Hohlrads 36 erst ab einem bestimmten einstellbaren Drehmoment erfolgt, ist in den Schwenkhebel 72, insbesondere seinen Lagerkörper 74, ein Torsionsstab 104 drehfest eingesetzt, welcher sich koaxial zur Drehachse 76 längs des Planetenradgetriebes 12 bis zu einem zylindrisch ausgebildeten Lagerkopf 106 eines Vorspannhebels 108 erstreckt, der abtriebsseitig des Planetenradgetriebes 12 ungefähr in Höhe des Hohlradtellers 58 in einer den Lagerkopf 106 aufnehmenden Lagerbohrung 110 des Getriebegehäuses 20 drehbar angeordnet ist.

Der Vorspannhebel 108 erstreckt sich dabei in einer senkrecht auf der Drehachse 32 und der Drehachse 76 stehenden Ebene und weist an seinem vorderen, dem Lagerkopf 106 entgegengesetzten Ende ein Gleitstück 112 auf, welches sich von dem Vorspannhebel 108 in Richtung auf den Schrauberkopf 16 erstreckt.

Dieses Gleitstück 112 liegt auf einer Vorspannkulisse 114 eines Kulissenrings 116 auf, der seinerseits koaxial zur Drehachse 32 auf einem sich von dem Planetenradgetriebe 12 in Richtung auf den Schrauberkopf 16 erstreckenden zylindrischen Ansatz 118 des Getriebegehäuses 20 drehbar gelagert ist. Die Vorspannkulisse 114 weist dabei eine sich in Richtung der Drehachse 32 parallel zu dieser erstreckende, jedoch zur Drehachse 32 exzentrische Fläche auf, auf welcher das Gleitstück 112 des Vorspannhebels 108 aufliegt. Durch Verdrehen des Kulissenrings 116 um einen bestimmten maximalen Drehwinkel ist somit das Gleitstück 112 von einem geringeren radialen Abstand zur Drehachse 32 in einen größeren radialen Abstand - und umgekehrt - überführbar, was ein Verschwenken des Vorspannhebels 108 und somit ein Verdrehen des Torsionsstabs 104 zur Folge hat. Dabei wird der Torsionsstab 104 derart verdreht, daß dieser den Schwenkhebel 72 in Richtung seiner Ausgangsstellung vorspannt, so daß der Fortsatz 80 an der Wandfläche 86 im gegendrehmomentfreien Betriebszustand des Drehmomentschraubers anliegt.

Die exzentrische Fläche 120 ist dabei so ausgebildet, daß deren minimaler radialer Abstand von der Drehachse 32 über den Vorspannhebel 108 bereits eine Grundvorspannung des Torsionsstabs 104 bewirkt.

Da in diesem Zustand eine Montage des Kulissenrings mit Problemen verbunden wäre, ist an dem Kulissenring 116 im Anschluß an die Kulisse 114 eine Montagekulisse 122 vorgesehen. Diese hat einen minimalen radialen Abstand von der Drehachse 32, der einer vorspannungsfreien Stellung des Gleitstücks entspricht und verläuft bis zu einem maximalen radialen Abstand, von dem aus sie über eine Stufe 124 in die Kulisse 114 übergeht. Bei der Montage kann somit der Kulissenring so aufgesetzt werden, daß das Gleitstück im Bereich des minimalen radialen Abstands der Montagekulisse liegt. Durch einfaches Verdrehen des Kulissenrings 114 kann dann das Gleitstück 112 über die Stufen 124 hinweg in den Bereich der Vorspannkulisse 114 bewegt werden. Durch die von der Montagekulisse 122 zur Vorspannkulisse 114 einen sich verringernden radialen Abstand von der Drehachse 32 aufweisende Stufe 124 ist ein Zurückdrehen des Kulissenrings 116 dergestalt, daß das Gleitstück 112 wieder im Bereich der Montagekulisse 122 zu liegen kommt, unmöglich.

Zur Verstellung des Kulissenrings 116 ist an diesen eine sich von dem Kulissenring 116 in Richtung des Schrauberkopfs 16 erstreckende Stellhülse 126 angeformt, die den gesamten zylindrischen Ansatz 118 des Getriebegehäuses 20 bis zu dessen Stirnseite 128 übergreift. Um diese Stellhülse 126 in verschiedenen Drehwinkelstellungen zum zylindrischen Ansatz 118 an diesem festlegen zu können, ist der zylindrische Ansatz 118 auf seiner Mantelfläche 130 mit sich von der Stirnseite 128 ausgehend in Richtung des Motors 10 parallel zur Drehachse 32 erstreckenden Umfangsnuten 132 versehen. In diese Umfangsnuten 132 greifen an einer der Mantelfläche 130 zugewandten Innenfläche 134 der Stellhülse angeordnete Rastnasen 136 federnd ein, wobei die Rastnasen vorzugsweise einstückig an die Stellhülse 126 angeformt sind, die ihrerseits aus federelastischem Material ausgebildet ist.

Zweckmäßigerweise sind die Umfangsnuten 132 über die gesamte Mantelfläche 130 im der Sirnseite 128 benachbarten Bereich verteilt, wogegen vorzugsweise zwei einander gegenüberliegende Rastnasen 136 vorgesehen sind, die geringfügig so weit gegeneinander versetzt sind, daß sie die Stellhülse 126 spielfrei in den Umfangsnuten 132 verrasten.

Ein Verdrehen der Stellhülse 126 erfolgt mittels eines die Stellhülse 126 in ihrem dem Schrauberkopf 16 zugewandten vorderen Bereich auf einer Außenfläche 138 übergreifenden Schaltring 140, welcher mit Rastkörpern 142 in entsprechende Ausnehmungen 144 in der Außenfläche 138 der Stellhülse 126 eingreift und dadurch drehfest mit dieser verbunden ist. Vorzugsweise übergreift der Schaltring 140 zusätzlich noch die Stirnseite 128 des zylindrischen Ansatzes 118 bis zur Antriebswelle 14.

Um zusätzlich noch eine Verdrehstellung der Stellhülse 126 relativ zum zylindrischen Ansatz 118 festlegen zu können, ist in dem Schaltring eine sich radial von außen durch diesen hindurch erstreckende Stellschraube 146 eingedreht, welche mit ihrer vorderen Fläche 148 auf die Außenfläche 138 der Stellhülse 126 im Bereich von deren Rastnasen 136 drücken kann, so daß die Rastnasen 136 nicht mehr federnd aus den Umfangsnuten 132 herausbewegbar, sondern in diesen fixiert sind. Damit ist ein Verdrehen der Stellhülse 126 unmöglich.

Das erfindungsgemäße erste Ausführungsbeispiel funktioniert nun folgendermaßen:
Die Vorspannung des Torsionsstabs 104, wodurch die Schaltgabel 70 in ihrer Ausgangsstellung gehalten wird, wird so gewählt, daß während des normalen Eindrehens einer Schraube mit dem Schrauberkopf 16 das erste Hohlrad 36 mit dem Schaltstift 66 durch die Schaltgabel 70 drehfest gehalten wird, das heißt, daß das auf das erste Hohlrad 36 wirkende Gegendrehmoment nicht in der Lage ist, die Schaltgabel 70 aus ihrer Ausgangsstellung herauszuschwenken, in welcher den Fortsatz 80 an der Wandfläche 86 der ovalen Ausnehmung 82 anliegt.

Ist nun die Schraube eingeschraubt, so steigt das auf das erste Hohlrad 36 wirkende Gegendrehmoment an, was dazu führt, daß der Schaltstift 66 nunmehr die Schaltgabel 70 aus ihrer Ausgangsstellung heraus verschwenkt, wodurch der Taster 92 freigegeben wird und über den Motorabschalter 90 eine Unterbrechung einer Stromzufuhr zum Elektromotor 10 bewirkt. Die Schaltgabel 70 kann dabei so weit ausgeschwenkt werden, bis der Fortsatz 80 an der die maximale Schwenkstellung definierenden Wandfläche 88 der ovalen Ausnehmung 82 anliegt. In dieser Schwenkstellung ist ein Weiterdrehen des ersten Hohlrades 36 nicht mehr möglich, da der Schaltstift 66 die Schaltgabel 70 nicht mehr weiter verschwenken kann. Der in diesem Zustand noch im gesamten Getriebesystem vorhandene Drehimpuls kann somit dazu ausgenützt werden, die Schraube noch zusätzlich festzuziehen.

Ein derartiges zusätzliches Festziehen erfolgt insbesondere bei einem sogenannten harten Schraubfall, bei welchem das auf die Antriebswelle 14 und somit auch auf das erste Hohlrad 36 wirkende Gegendrehmoment schlagartig ansteigt, so daß die Schaltgabel 70 sehr schnell die maximale Schwenkstellung 88 erreicht, in dieser die Drehung des ersten Hohlrads 36 und somit das Abfallen des im Gesamt-Antriebssystem, gebildet durch den Motor 10, das Getriebe 12 und die Antriebswelle 14, vorhandenen Drehimpulses stoppt, so daß dieser sogenannte Restdrehimpuls noch in der Lage ist, die Schraube mit einem Drehmoment festzuziehen, welches das maximal von dem gesamten Antriebssystem im Normalfall aufzubringende Drehmoment übersteigt.

Dagegen funktioniert die erfindungsgemäße Vorrichtung im weichen Schraubfall so, daß das Gegendrehmoment sehr langsam ansteigt, so daß ein langsames Verschwenken der Schaltgabel 70 durch den Schaltstift 66 erfolgt, was wiederum zur Folge hat, daß zwischen dem Abschalten des Motors 10 und dem Erreichen der maximalen Schwenkstellung der Schaltgabel eine Zeitspanne verbleibt, in welcher das gesamte Antriebssystem zum Stillstand kommen kann, so daß im weichen Schraubfall das Drehmoment, mit welchem die Schraube letztlich angezogen ist, dem vom Gesamtantriebssystem aufzubringenden Drehmoment entspricht.

Um nun dieses maximale Drehmoment zu variieren, kann durch Drehen des Schaltrings 140 auch der Kulissenring 116 verdreht und somit über den unterschiedlichen radialen Abstand des Gleitstücks 112 von der Drehachse 32 die Vorspannung des Torsionsstabes 104 variiert werden, so daß ein Ansprechen der Drehmomentabschaltung bei unterschiedlichen Gegendrehmomenten einstellbar ist.

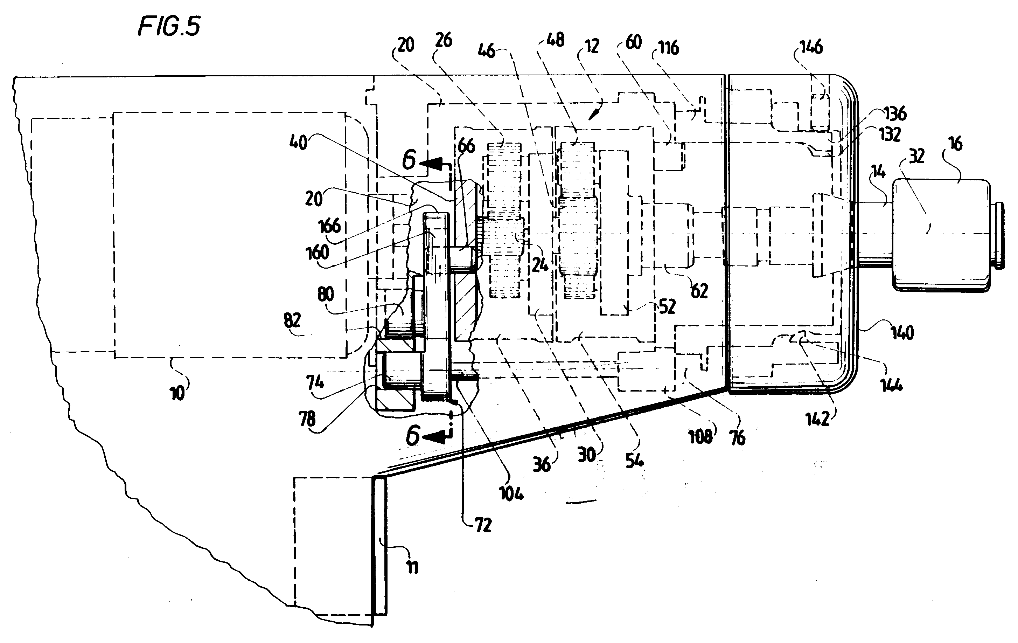

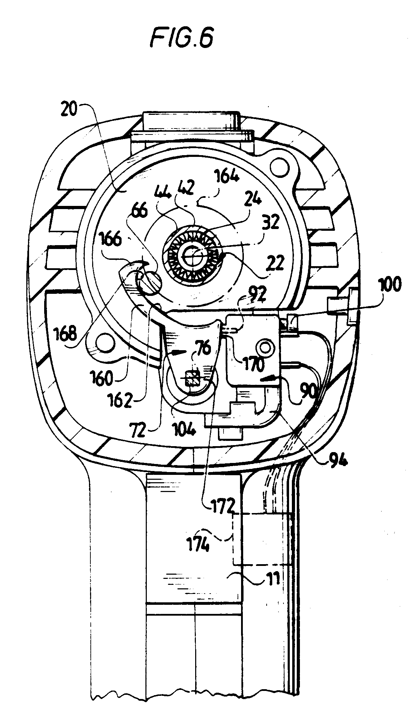

Bei einem zweiten Ausführungsbeispiel, dargestellt in Fig. 5 und 6, ist die Anordnung des Motors 10 des Planetenradgetriebes 12 und der Antriebswelle 14 relativ zueinander sowie deren besonderer Aufbau mit dem des ersten Ausführungsbeispiels, dargestellt in den Fig. 1 bis 3, identisch. Soweit dieselben Teile verwendet werden, sind diese auch mit denselben Bezugszeichen wie beim ersten Ausführungsbeispiel versehen, so daß diesbezüglich auf die Beschreibung zum ersten Ausführungsbeispiel verwiesen werden kann.

Im Gegensatz zum ersten Ausführungsbeispiel ist der Schwenkhebel 72 nicht mit einer Schaltgabel 70 versehen, sondern mit einem ungefähr sichelförmigen Hebelarm 160, welcher so ausgebildet ist, daß dessen der Drehachse 32 zugewandte Innenseite 162 einen Umlauf des Schaltstifts 66 auf einer geschlossenen Bahn 164 um die Drehachse 32 ermöglicht. An einem Ende dieses Hebelsarms 160 ist eine in die Umlaufbahn 164 eingreifende Nase 166 angeordnet, welche ein freies Umlaufen des Schaltstifts 66 auf der Umlaufbahn 164 verhindert und eine sich von der Innenseite 162 des Hebelarms einen zunehmend geringeren radialen Abstand von der Drehachse 32 aufweisende Auflauffläche 168 besitzt, gegen die der Schaltstift 66 in der Ausgangsstellung des Schwenkhebels 72 anliegt.

Außerdem ist der Schwenkhebel 72 noch zusätzlich mit dem Fortsatz 80 versehen, welcher in der Ausgangsstellung an der Wandfläche 86 der ovalen Ausnehmung 82 anliegt. Allerdings ist die ovale Ausnehmung in Schwenkrichtung 84 des Schwenkhebels 72 um seine Drehachse 76 derart vergrößert, daß der Hebelarm 160 so weit verschwenken kann, bis der Schaltstift 66 die Nase 166 aus seiner Umlaufbahn 164 herausbewegt hat und über die Nase 166 hinweggleitet. Somit ist keine Begrenzung der maximalen Schwenkstellung durch die Wandfläche 88 der ovalen Ausnehmung erforderlich und notwendig.

Desgleichen ist der Motorabschalter 90 so angeordnet, daß er mit seinem Taster 92 an der in Fig. 5 rechten Seitenfläche 170 eines Basisteils 172 des Schwenkhebels 72 anliegt.

Dieses zweite Ausführungsbeispiel funktioniert nun folgendermaßen:
Sobald das Gegendrehmoment an der Antriebswelle 14 ansteigt, wird der Schaltstift 66 mit zunehmender Kraft gegen die Auflauffläche 168 drücken und somit die Nase 166 mitsamt dem Hebelarm 160 in radialer Richtung nach außen aus der Umlaufbahn 164 herausbewegen. Die Auflauffläche 168 ist hierbei vorzugsweise so gestaltet, daß eine zunehmende Verschwenkung der Nase 166 aus der Umlaufbahn 164 heraus ein zunehmend größeres Gegendrehmoment erfordert. Ist das Gegendrehmoment dann so groß, daß der Schaltstift 66 die Nase 166 vollständig aus der Umlaufbahn 164 herausbewegt hat und über diese hinweggeglitten ist, so kann das erste Hohlrad 36 als Ganzes eine Umdrehung durchführen, bei welcher der Schaltstift 66 auf der Umlaufbahn 164 umläuft. Währenddessen ist der Hebelarm 160 mit der Nase 166 wieder in radialer Richtung auf die Drehachse 32 zu zurückgeschwenkt, so daß die Nase 166 wieder in die Umlaufbahn 164 hineinragt und ein Weiterbewegen des Schaltstifts 66 auf dieser verhindert.

Dieses Herausschwenken der Nase 166 aus der Umlaufbahn 164 hat dazu geführt, daß sich auch die rechte Seitenfläche 170 des Basisteils 172 von dem Motorabschalter 90 entfernt und somit den Taster 92 freigegeben hat. Hierdurch wird ein Auslöseimpuls erzeugt, welcher zu einer Abschaltung des Motors 10 führt, wobei hierzu eine auf diesen Auslöseimpuls reagierende und den Motor 10 abschaltende Steuerung 174 erforderlich ist, da, nachdem der Schaltstift 66 die Nase 166 passiert hat, der Schwenkhebel 72 wieder in seine Ausgangsstelung zurückschwenkt und den Taster 92 des Schalters 90 beaufschlagt, was ohne zusätzliche Steuerung 174 wieder den Motor 10 in Gang setzen würde. Dies ist jedoch nicht erwünscht, sondern es ist gefordert, daß der Motor 10, nachdem der Motorschalter 90 einmal einen Auslöseimpuls abgegeben hat, bis zum nächsten Schraubvorgang, das heißt bis zum nächsten Einschalten des Motors 10 durch den Handschalter 11, ausgeschaltet bleibt.

Die Einstellung des unterschiedlichen Ansprechdrehmoments, das heißt die unterschiedliche Vorspannung des Torsionsstabes 104 erfolgt mit denselben Vorrichtungen und in derselben Weise wie bei dem ersten Ausführungsbeispiel, so daß bezüglich der Beschreibung dieser Einstellung auf die Ausführungen zum ersten Ausführungsbeispiel verwiesen wird.

## Patentansprüche

1. Motorgetriebene Maschine mit variabler Drehmomenteinstellung, insbesondere elektrisches Handwerkzeug, mit einem Motor (10) und einem eine Arbeitsspindel (14) antreibenden Planetengetriebe (12), umfassend ein drehbar gelagertes und bei Übersteigen eines einstellbaren Grenzdrehmoments gegen die Wirkung einer Federkraft einen Motorabschalter (90) betätigendes Hohlrad (36), **dadurch gekennzeichnet**, daß zur Erzeugung der Federkraft ein sich in axialer Richtung (32) längsseits des Planetengetriebes (12) erstreckendes Torsionsfederelement (104) vorgesehen ist, welches an einem Ende ein in einen Nocken (66) am Hohlrad eingreifendes Schwenkelement (72) trägt und an einem entgegengesetzten Ende in einem Widerlager (106) gehalten ist, daß das Schwenkelement (72) entgegen einer Kraftwirkung des Torsionsfederelements (104) aus einer Ausgangsstellung herausschwenkbar ist und daß dabei der Motorabschalter (90) betätigbar ist.

2. Motorgetriebene Maschine nach Anspruch 1, dadurch gekennzeichnet, daß das Torsionsfederelement (104) in einer das Schwenkelement (72) in seine Ausgangsstellung bewegenden Richtung vorgespannt ist.

3. Motorgetriebene Maschine nach Anspruch 1 oder 2, dadurch gekennzeichnet, daß das Schwenkelement (72) auf einer Seite des Planetengetriebes (12) angeordnet ist.

4. Motorgetriebene Maschine nach Anspruch 3, dadurch gekennzeichnet, daß das Schwenkelement (72) antriebsseitig des Planetengetriebes (12) angeordnet ist.

5. Motorgetriebene Maschine nach Anspruch 3 oder 4, dadurch gekennzeichnet, daß das Schwenkelement (72) eine Stirnseite des Planetengetriebes (12) übergreift.

6. Motorgetriebene Maschine nach einem der Ansprüche 3 bis 5, dadurch gekennzeichnet, daß das Schwenkelement(72) in einen Zwischenraum zwischen Motor (10) und Planetengetriebe (12) eingreift.

7. Motorgetriebene Maschine nach einem der voranstehenden Ansprüche, dadurch gekennzeichnet, daß der Motorabschalter (90) im Bereich des Zwischenraums angeordnet ist.

8. Motorgetriebene Maschine nach einem der voranstehenden Ansprüche, dadurch gekennzeichnet, daß der Nocken (66) auf einer Stirnseite des Planetengetriebes (12) angeordnet ist.

9. Motorgetriebene Maschine nach einem der voranstehenden Ansprüche, dadurch gekennzeichnet, daß das Schwenkelement (72) in der Ausgangsstellung den Motorabschalter (90) beaufschlagt und daß der Motorabschalter (90) in seiner nicht beaufschlagten Stellung den Motor (10) abschaltet.

10. Motorgetriebene Maschine nach Anspruch 9, dadurch gekennzeichnet, daß der Motorabschalter (90) in Richtung auf die Ausgangsstellung des Schwenkelements (72) zustellbar ist.

11. Motorgetriebene Maschine nach einem der voranstehenden Ansprüche, dadurch gekennzeichnet, daß das Schwenkelement (72) eine den Nocken (66) aufnehmende Schaltgabel (70) aufweist.

12. Motorgetriebene Maschine nach einem der voranstehenden Ansprüche, dadurch gekennzeichnet, daß das Hohlrad (36) um einen begrenzten Schwenkwinkel drehbar ist.

13. Motorgetriebene Maschine nach einem der Ansprüche 1 bis 10, dadurch gekennzeichnet, daß das Hohlrad (36) um eine volle Umdrehung drehbar ist und daß das Schwenkelement (72) einen Anschlagarm (160, 166) aufweist, welcher sich in eine Umlaufbahn (164) des Nockens (66) erstreckt.

14. Motorgetriebene Maschine nach Anspruch 13, dadurch gekennzeichnet, daß der Anschlagarm (160, 166) eine bezüglich einer durch die Drehachse (32) des Hohlrads (36) hindurchlaufenden Ebenenschar in einem spitzen Winkel geneigte Auflauffläche (168) aufweist.

15. Motorgetriebene Maschine nach einem der voranstehenden Ansprüche, dadurch gekennzeichnet, daß das Widerlager (106) auf einer dem Schwenkelement (72) gegenüberliegenden Seite des Planetengetriebes (12) angeordnet ist.

16. Motorgetriebene Maschine nach einem der voranstehenden Ansprüche, dadurch gekennzeichnet, daß eine abtriebsseitig des Planetengetriebes (12) angeordnete Verstelleinrichtung (108, 116, 126, 140) für das Widerlager (106) vorgesehen ist.

17. Motorgetriebene Maschine nach Anspruch 16, dadurch gekennzeichnet, daß die Verstelleinrichtung einen das Torsionselement (104) als Widerlager drehfest aufnehmenden und koaxial zum Torsionselement drehbar gelagerten Hebel (106, 108) umfaßt, welcher mit seinem freien Ende (112) auf einer Kulisse (114) eines Einstellgliedes (116) anliegt.

18. Motorgetriebene Maschine nach Anspruch 17, dadurch gekennzeichnet, daß das Einstellglied (116) koaxial zur Arbeitsspindel (14) drehbar angeordnet ist.

19. Motorgetriebene Maschine nach Anspruch 18, dadurch gekennzeichnet, daß das Einstellglied (116) als Hülse ausgebildet und auf einem zylindrischen Ansatz (118) eines Getriebegehäuses (20) gelagert ist.

20. Motorgetriebene Maschine nach Anspruch 19, dadurch gekennzeichnet, daß der zylindrische Ansatz (118) in seiner Mantelfläche (130) mit in Achsrichtung desselben verlaufenden Nuten (132) versehen ist, in welche Rastnasen (136) des Einstellgliedes (116, 126) eingreifen.

21. Motorgetriebene Maschine nach Anspruch 20, dadurch gegekennzeichnet, daß an dem Einstellglied (116, 126) zwei Rastnasen (136) vorgesehen sind und daß eine dieser Rastnasen (136) gegenüber der ihr entsprechenden Nut einen geringen Versatz aufweist.

22. Motorgetriebene Maschine nach einem der voranstehenden Ansprüche, dadurch gekennzeichnet, daß eine Steuerung (174) vorgesehen ist, welche nach einer einmaligen Betätigung des Motorabschalters (90) den Motor (10) so lange abgeschaltet läßt, bis eine erneute Einschaltung an einem Handschalter (11) erfolgt ist.

## Claims

1. Motor-driven machine with variable torque adjustment, especially electrical hand tool, having a motor (10) and a planetary gear (12) driving a working spindle (14), comprising a rotatably mounted ring gear (36) which actuates a motor circuit breaker (90) counter to the effect of a spring force when an adjustable limiting torque is exceeded, characterised in that, to generate the spring force, there is provided a torsion-spring element (104) which extends in the axial direction (32) alongside the planetary gear (12) and which at one end carries a pivoting element (72) engaging into a cam (66) on the ring gear and at an opposite end is held in an abutment (106), in that the pivoting element (72) is pivotable out of an initial position counter to a force effect of the torsion-spring element (104), and in that the motor circuit breaker (90) is thereby actuable.

2. Motor-driven machine according to Claim 1, characterised in that the torsion-spring element (104) is prestressed in a direction moving the pivoting element (72) into its initial position.

3. Motor-driven machine according to Claim 1 or 2, characterised in that the pivoting element (72) is arranged on one side of the planetary gear (12).

4. Motor-driven machine according to Claim 3, characterised in that the pivoting element (72) is arranged on the driving side of the planetary gear (12).

5. Motor-driven machine according to Claim 3 or 4, characterised in that the pivoting element (72) engages over one end face of the planetary gear (12).

6. Motor-driven machine according to one of Claims 3 to 5, characterised in that the pivoting element (72) engages into an interspace between the motor (10) and planetary gear (12).

7. Motor-driven machine according to one of the preceding claims, characterised in that the motor circuit breaker (90) is arranged in the region of the interspace.

8. Motor-driven machine according to one of the preceding claims, characterised in that the cam (66) is arranged on one end face of the planetary gear (12).

9. Motor-driven machine according to one of the preceding claims, characterised in that the pivoting element (72) loads the motor circuit breaker (90) in the initial position, and in that the motor circuit breaker (90) switches off the motor (10) in its non-loaded position.

10. Motor-driven machine according to Claim 9, characterised in that the motor circuit breaker (90) can be advanced in the direction of the initial position of the pivoting element (72).

11. Motor-driven machine according to one of the preceding claims, characterised in that the pivoting element (72) has a shift fork (70) receiving the cam (66).

12. Motor-driven machine according to one of the preceding claims, characterised in that the ring gear (36) is rotatable through a limited pivot angle.

13. Motor-driven machine according to one of Claims 1 to 10, characterised in that the ring gear (36) is rotatable through a complete revolution, and in that the pivoting element (72) has a stop arm (160, 166) which extends into a path of rotation (164) of the cam (66).

14. Motor-driven machine according to Claim 13, characterised in that the stop arm (160, 166) has a run-on face (168) inclined at an acute angle relative to a family of planes running through the axis of rotation (32) of the ring gear (36).

15. Motor-driven machine according to one of the preceding claims, characterised in that the abutment (106) is arranged on a side of the planetary gear (12) located opposite the pivoting element (72).

16. Motor-driven machine according to one of the preceding claims, characterised in that an adjusting device (108, 116, 125, 140) arranged on the driven side of the planetary gear (12) is provided for the abutment (106).

17. Motor-driven machine according to Claim 16, characterised in that the adjusting device comprises a lever (106, 108) which receives the torsion element (104) fixedly in terms of rotation as an abutment and is rotatably mounted, coaxially relative to the torsion element and which bears with its free end (112) on a rocker (114) of a setting member (116).

18. Motor-driven machine according to Claim 17, characterised in that the setting member (116) is rotatably arranged coaxially relative to the working spindle (14).

19. Motor-driven machine according to Claim 18, characterised in that the setting member (116) is designed as a sleeve and is mounted on a cylindrical extension (118) of a gear case (20).

20. Motor-driven machine according to Claim 19, characterised in that the cylindrical extension (118) is provided in its outer surface (130) with grooves (132) which extend in the axial direction of said extension and into which detent noses (136) of the setting member (116, 126) engage.

21. Motor-driven machine according to Claim 20, characterised in that two detent noses (136) are provided on the setting member (116, 126), and in that one of these detent noses (136) has a slight offset in relation to the groove corresponding to it.

22. Motor-driven machine according to one of the preceding claims, characterised in that there is a control (174) which, after the motor circuit breaker (90) has been actuated once, leaves the motor (10) cut off until a renewed switch-on has taken place on a hand switch (11).

## Revendications

1. Machine entraînée par moteur à réglage variable du couple de rotation, en particulier outil à main électrique, avec un moteur (10) et un engrenage planétaire (12) entraînant un arbre moteur (14), comprenant une couronne de train planétaire (36) montée tournante et actionnant un interrupteur de moteur (90) contre une force de ressort lors du dépassement d'un couple de rotation limite réglable, caractérisée en ce qu'il est prévu pour la production de la force de ressort un élément formant ressort de torsion (104) s'étendant dans le sens axial (32) le long de l'engrenage planétaire (12), qui porte à une extrémité un élément basculant (72) se mettant en prise dans une came (66) sur la couronne de train planétaire et est maintenu à une extrémité opposée dans un contre-appui (106), en ce que l'élément basculant (72) peut basculer hors de sa position de départ contre l'action d'une force de l'élément formant ressort à torsion (104) et en ce que l'interrupteur de moteur (90) peut alors être actionné.

2. Machine entraînée par moteur selon la revendication 1, caractérisée en ce que l'élément formant ressort de torsion (104) est précontraint dans un sens déplaçant l'élément basculant (72) dans sa position de départ.

3. Machine entraînée par moteur selon la revendication 1 ou 2, caractérisée en ce que l'élément basculant (72) est disposé sur un côté de l'engrenage planétaire (12).

4. Machine entraînée par moteur selon la revendication 3, caractérisée en ce que l'élément basculant (72) est disposé sur le côté menant de l'engrenage planétaire (12).

5. Machine entraînée par moteur selon la revendication 3 ou 4, caractérisée en ce que l'élément basculant (72) entoure un côté frontal de l'engrenage planétaire (12).

6. Machine entraînée par moteur selon l'une des revendications 3 à 5, caractérisée en ce que l'élément basculant (72) se met en prise dans un espace intermédiaire entre le moteur (10) et l'engrenage planétaire (12).

7. Machine entraînée par moteur selon l'une des revendications précédentes, caractérisée en ce que l'interrupteur de moteur (90) est disposé dans la région de l'espace intermédiaire.

8. Machine entraînée par moteur selon l'une des revendications précédentes, caractérisée en ce que la came (66) est disposée sur un côté frontal de l'engrenage planétaire (12).

9. Machine entraînée par moteur selon l'une des revendications précédentes, caractérisée en ce que l'élément basculant (72) sollicite dans la position de départ l'interrupteur de moteur (90) et en ce que l'interrupteur de moteur (90) arrête le moteur (10) dans sa position non sollicitée.

10. Machine entraînée par moteur selon la revendication 9, caractérisée en ce que l'interrupteur de moteur (90) peut être déplacé en direction de la position de départ de l'élément basculant (72).

11. Machine entraînée par moteur selon l'une des revendications précédentes, caractérisée en ce que l'élément basculant (72) présente une fourchette articulée (70) recevant la came (66).

12. Machine entraînée par moteur selon l'une des revendications précédentes, caractérisée en ce que la couronne de train planétaire (36) peut effectuer une rotation sur un angle de basculement limité.

13. Machine entraînée par moteur selon l'une des revendications 1 à 10, caractérisée en ce que la couronne de train planétaire (36) peut effectuer une révolution complète et en ce que l'élément basculant (72) présente un bras formant butée (160, 166), qui s'étend dans une trajectoire (164) de la came (66).

14. Machine entraînée par moteur selon la revendication 13, caractérisée en ce que le bras formant butée (160, 166) présente une surface de contact (168) inclinée d'un angle aigu par rapport à un système de plans traversant l'axe de rotation (32) de la couronne de train planétaire (36).

15. Machine entraînée par moteur selon l'une des revendications précédentes, caractérisée en ce que le contre-appui (106) est disposé sur un côté de l'engrenage planétaire (12) faisant face à l'élément basculant (72).

16. Machine entraînée par moteur selon l'une des revendications précédentes, caractérisée en ce qu'un dispositif de déplacement (108, 116, 126, 140) pour le contre-appui (106) est prévu sur le côté mené de l'engrenage planétaire (12).

17. Machine entraînée par moteur selon la revendication 16, caractérisée en ce que le dispositif de déplacement comprend un levier (106, 108) recevant l'élément de torsion (104) en tant que contre-appui de manière fixe en rotation et monté avec possibilité de rotation de manière coaxiale à l'élément de torsion, qui repose par son extrémité libre (112) sur une coulisse (114) d'un organe d'ajustement (116).

18. Machine entraînée par moteur selon la revendication 17, caractérisée en ce que l'organe d'ajustement (116) est monté de manière coaxiale à l'arbre moteur (14) avec possibilité de rotation.

19. Machine entraînée par moteur selon la revendication 18, caractérisée en ce que l'organe d'ajustement (116) est conçu comme une douille et monté sur un épaulement cylindrique (118) d'un carter d'engrenage (20).

20. Machine entraînée par moteur selon la revendication 19, caractérisée en ce que l'épaulement cylindrique (118) est pourvu dans sa surface d'enveloppe (130) de gorges (132) orientées dans son sens axial, dans lesquelles se mettent en prise des taquets d'encliquetage (136) de l'organe d'ajustement (116, 126).

21. Machine entraînée par moteur selon la revendication 20, caractérisée en ce que deux taquets d'encliquetage (136) sont prévus sur l'organe d'ajustement (116, 126) et en ce que l'un de ces taquets d'encliquetage (136) présente par rapport à la gorge lui correspondant un léger décalage.

22. Machine entraînée par moteur selon l'une des revendications précédentes, caractérisée en ce qu'une commande (174) est prévue, qui laisse le moteur (10) arrêté après un seul actionnement de l'interrupteur de moteur (90), jusqu'à ce qu'une nouvelle mise en marche soit réalisée par un interrupteur manuel (11).
